(19) Europäisches Patentamt
European Patent Office
Office européen des brevets

(11) **EP 3 269 830 A1**

## (12) EUROPEAN PATENT APPLICATION
published in accordance with Art. 153(4) EPC

(43) Date of publication:
**17.01.2018 Bulletin 2018/03**

(21) Application number: **16765311.2**

(22) Date of filing: **11.03.2016**

(51) Int Cl.:
*C21B 13/14* (2006.01)    *C21B 13/02* (2006.01)
*F27B 1/02* (2006.01)

(86) International application number:
**PCT/KZ2016/000004**

(87) International publication number:
**WO 2016/148555 (22.09.2016 Gazette 2016/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **13.03.2015 KZ 20150360**

(71) Applicant: **Tleugabulov, Suleiman**
**Almaty 050008 (KZ)**

(72) Inventor: **Tleugabulov, Suleiman**
**Almaty 050008 (KZ)**

(74) Representative: **Kastel, Stefan**
**Kastel Patentanwälte**
**St.-Cajetan-Straße 41**
**81669 München (DE)**

(54) **METHOD FOR THE REDUCTION SMELTING OF STEEL AND APPARATUS FOR CARRYING OUT SAID METHOD**

(57)    The invention relates to the metallurgy of iron and steel. The object of the invention is to develop a method for reducing steel melting, including charging the charge into a shaft furnace, blowing oxygen-enriched blast to create an acute combustion flame that is different and based on the use of a mono-charge for reducing steel melting.

The technical result in the claimed method and device is achieved by the fact that carbon-containing pellets of iron oxides and alloying metals of the 8-20 mm fraction with the stoichiometric content of carbon-containing reagents for reduction of metal oxides are loaded into the furnace without coke and flux, the layer is heated by countercurrent of the hot heat carrier gas in As a result of the heating of the charge and the direct reduction of metals, metallized pellets are formed, which are periodically discharged from the lower part of the shaft furnace through the sluice ampere into the smelting chamber and melted by blowing with a high-temperature flame with an initial temperature of 2200-2400°C, the off-gas is mixed with the top gas from a shaft furnace at a temperature of 200-300°C, a mixture of a gas stream with a temperature of 1150-1220°C as a coolant is introduced into the lower part layer of carbon-containing pellets in the shaft furnace, the cycle is repeated, the melt of the steel melted in the melting chamber is discharged through the tap.

EP 3 269 830 A1

**Description**

The invention relates to the metallurgy of iron and steel. The existing traditional technology for the production of iron and steel all over the world is based on two stages: 1) the smelting reduction of the prepared iron ore raw material - agglomerate and pellets with the production of cast iron and carburized semi-products; 2) oxidative smelting of cast iron and carburized intermediate products to produce steel. On a global scale, there is as yet no developed and implemented method for reducing steel melting. The invention of reducing steel melting represents a new technical solution and opens a global direction in the metallurgy of iron and steel. A distinctive feature of the solution of the problem lies in the effective use of heat and mass transfer processes in high shaft furnaces, the example of blast furnaces, the realization of direct reduction of iron and associated metals with solid carbon and reducing smelting of the charge, with the possibility of excluding or restricting the carburization of reduced metals. The realization of processes in this order is achieved by regulating the composition of the initial metal-containing components of the charge, the carbonaceous reagent, preparing them in certain mass ratios, in obtaining carbon-containing granules or blend mixtures with the stoichiometric content of the reducing carbon, by metallizing them and fusing metallized products.

In existing technological processes, raw materials for the production of iron and steel are iron-ore materials with additives of other iron-containing ores or concentrates. All these materials consist, first of all, of metal oxides and gangue. In this connection, the basis of the metallurgical complex is the reduction of metals from their oxide compounds. The organization of recovery processes is based on the use of two reagents, consisting of: hot reducing gases (HRG) and solid carbon.

There are known methods of 1) reduction-melting process carried out in blast furnaces (AS No. 492546 S 21 V 5/00, Published on 25.11.1975, Bulletin No. 43. Method of blast furnace smelting, I.F. Kurunov, A. I. Isteev, A.N. Pohvisiev, Yu.S. Yusfin, Y.S. Karabasov), in which layers of iron-laden material (agglomerate) and coke during loading should be arranged alternating horizontal layers. 2) solid-phase reduction process carried out in shaft furnaces (AS 605835 C 21 V 5/00, 07.04.1978, Bulletin No. 17. Method of blast furnace smelting, I.F. Kurunov, A.I. Isteev , A.N. Pokhvisiev, Yu.S. Yusfin, Y.S. Karabasov and others), in which pellets are loaded without a layer of coke to produce metallized products.

In the first variant of the process, from the bottom of the blast furnace to the hearth is fed a hot blast (FHB), which reacts with the coke to form a hot reducing gas (HRG) with an initial temperature of 1900-2100°C. As a result of heat transfer from the gas to the charge, the temperature of the gas within the height of the charge column of 2-3 m decreases to a level of 1300 ° C. Further, moving along the entire height of the mine, 18-20 m high, the gas temperature drops to a level of 200-250°C. In the temperature interval 450-900°C, HRG, along with heat transfer, are used for iron reduction. At a temperature above 900°C, the main iron reducer is solid coke carbon. Metallized material, passing through a layer of coke, inevitably carburizes, forms a melt of cast iron.

In the second method, coke is completely excluded from the composition of the charge. The reduction of iron to the degree of 0.95-0.98 is carried out by HRG, which is also introduced from below the shaft furnace at a temperature of 900-1000 ° C. The processes of solid-phase reduction of iron by a gas flow occur in the temperature range of the gas at the inlet of 800-1000 ° C and at the outlet temperature the temperature of the off-gas is reduced to 300-400 ° C. The metallized product is mainly metallized pellets, in the solid state they are discharged from the lower part of the furnace. Metallized pellets are cooled with raw natural gas before discharge, for which part of the volume in the lower part of the furnace is removed. In the cooling process, metallized products are also carburized.

The analogues presented for the reduction processes have drawbacks:

1. The cast iron melted from the blast furnace according to the first method and the solid metallized pellets discharged from the shaft furnace according to the second method are carburized semi-products and are further used only for steel smelting in separate steelmaking units.
2. Since the main reducing agent in both methods is a hot reducing gas (HRG) and carbon plays a secondary role, the main condition for the reduction process is the gas permeability of the burden layer, which requires the preparation of the charge: the production of agglomerated and sorted batch; creation of a separate complex of agglomeration technology and quality control of raw materials.
3. The process from ore to steel is divided into two main stages: 1) obtaining a carburized metal melt - cast iron with a melting reduction method and metallized solid pellets with a solid-phase reduction method; 2) oxidative melting of carburized semi-products, which complicates the complex of processes in general and increases the cost of the final product.

A method is known for oxidative melting of carburized semi-products in oxygen converters (Patent No. 2186160 IPC7 C 21 C 5/28, C 21 C 7/06, published 2002.27.02 Method of melting low-carbon vanadium-containing steel of increased strength and cold resistance S.K. Nosov, A.Ya. Kuzavkov, V.I. Ilyin, M.I. Arshansky, and others). The production of steel by oxidative remelting of cast iron in oxygen converters and metallized pellets in electric steelmaking units is accomplished by oxidation of excess carbon in the first case by free oxygen, in the second case bound to oxides by oxygen. The technology of oxidizing melting of steel has the following drawbacks:

- Oxidizing melting of carburized semi-products - cast iron and other intermediates along with oxidation of carbon - oxidizes dissolved useful metals - manganese, chromium, vanadium, whose oxides form slag and are thrown into dumps, which creates an environmental problem;
- smelted steel is saturated with oxygen, which worsens the quality of steel;
- there is a need for additional out-of-furnace treatment of steel;
- deoxidation of steel with the introduction of expensive ferroalloys.

The method of continuous reduction melting of metal (innovation patent No. 26792 for the invention, which is closest in essence and content to the proposed method, is Tleugabulov S.M., Koyshina G.M., Aldangarov E.M., published on 03/20/2013 , Bulletin No. 4).

1. According to the prototype, the reduction-melting process includes a carbon-bearing iron ore charge (coke fines mixture of fine iron ore material) and coke fraction of 25-40 mm, their loading with vertical unmixing layers into a shaft furnace of blast furnace type, the charge column occupying the central, post coke peripheral region working space of the shaft furnace.
2. On the circumference of the hearth, oxygen-enriched air up to 30-40% is blown, which supports incomplete burning of the peripheral layers of coke. The temperature of the resulting gas flare in the combustion zone reaches 2400-2600°C, which actually replaces the effect of electric arc melting.
3. The overwhelming part of the high-temperature gas passes up through the coke layers and heats the central column of the charge consisting of a mixture of iron ore material and a stoichiometric amount of a carbonaceous reductant that heats up as it descends, is reduced with solid carbon and melted without excess of coke. Therefore, the metal produced by the content of carbon corresponds to the composition of the steel.
4. The formation of vertical columns of coke at the periphery and batch in the center of the furnace is intended to exclude the possibility of crossing the molten charge through the layer of the coke nozzle and filtering the liquid phase through it, thereby avoiding the carburization of the metal.

At the same time, the following drawbacks exist in the said prototype by the method and apparatus of the unit.

1. The central column of the charge consists of a fine fraction of charge or granules, therefore its gas permeability is insufficient and does not provide its sufficient heating for direct reduction of metals.
2. The high-temperature gas stream formed by the burning of coke passes mainly through the peripheral coke bed. Regulation of its flow along the section of the furnace is not provided with the necessary factor.
3. The parallel presence of two vertical columns of batch and coke in the working space of the shaft furnace leads to an uneven distribution of the gas while processing the charge.

The level of the beginning of the melting of the charge and the formation of the liquid phase depends on the distribution of the hot gas stream over the furnace section and the character of heat exchange between the layers of coke and the charge column. These process parameters are practically difficult to control.
In this regard, early melting of the charge can lead to the outflow of the liquid phase in the horizontal direction, its penetration into the layers of coke and thus to the partial carburization of the metal, and does not exclude the formation of a certain part of the cast iron.
These shortcomings in analogues and prototypes are filled with the solution of the following problem.
The object of the invention is to develop a method for reducing steel melting and a device for its implementation based on a monobridge comprising prepared carbon-containing iron ore granules of sufficient gas permeability consisting of iron ore concentrates, iron-containing wastes including oxides of alloying metals, and also stoichiometric amounts of carbon for reducing iron and alloying metals, loading and formation of a dense layer of the column of the mono-beam along the entire section of the shaft furnace, uniform against flow of the charge and hot gas stream, throughout the furnace section, heating of the charge, direct reduction of metals by carbon and production of metallized products, their hot transfer from the solid phase zone of the shaft type to the melting chamber, smelting of the hot metallized layer is carried out by blowing with a high-temperature flame, which forms the melt of steel without carburizing the metal.
The achieved technical result is the realization of reducing melting of metal from ore to steel without intermediates in the production of pig iron and other carbide intermediates. The elimination of excess carbon and the stage of carburizing the metal from the cycle of the reduction-melting process is a new phenomenon in iron and steel metallurgy.
The technical result in the claimed method and device is achieved by the fact that carbon-containing pellets of iron oxides and alloying metals of the 8-20 mm fraction with the stoichiometric content of carbon-containing reagents for reduction of metal oxides are loaded into the furnace without coke and flux, the layer is heated by countercurrent of the hot heat carrier gas in As a result of the heating of the charge and the direct reduction of metals, metallized pellets are formed, which are periodically discharged from the lower part of the shaft furnace through the sluice ampere into the smelting chamber and melted by blowing with a high-temperature flame with an initial temperature of 2200-2400 ° C, the off-gas is mixed with the top gas from a shaft furnace at a temperature of 200-300 ° C, a mixture of a gas stream with a temperature of 1150-1220 ° C as a coolant is introduced into the lower part layer of carbon-containing pellets in the shaft furnace, the cycle is repeated, the melt of the steel melted in the melting chamber is discharged through the tap.

The method for the reduction melting of steel is explained by a drawing of a reduction-melting complex, where 1 is a receiving funnel; 2 - an atmospheric outlet valve; 3 - atmospheric gas discharge; 4 - airlock chamber; 5 - the gas valve; 6 - charge shutter; 7 - furnace shaft; 8 - top; 9 - dome of the furnace; 10 - charge column; 11 - dissolving; 12 - shoulders; 13 - supply pipes (tuyeres); 14 - annular gas pipeline; 15 - annular gas outlet; 16 - direct gas outlet; 17 - general gas collector; 18 - circulating gas pipeline; 19 - gas gate; 20 - the output tray; 21 - melting chamber; 22 - melting charge; 23 - injector; 24 - oxygen-enriched blast; 25 - fuel; 26 - dome of the smelting furnace; 27 - the gate of hot gas; 28 - gas pipeline of a mixture of hot gas-coolant; 29 - tap for the release of metal; 30 - tap for the release of slag.

The work of the recovery and melting complex. The prepared funnel 1 is supplied in portions with prepared carbonaceous iron-ore granules. The gas outlet valve 2 is opened on the atmospheric gas outlet 3 of the airlock chamber 4. By alternately opening the gas valve 5 and the charge shutter 6, the charge from the receiving funnel enters the sluice chamber. When the necessary mass of material is recruited in the lock chamber, carbon-containing pellets are likewise overloaded to the shaft furnace 7 in the same way by alternately opening the lower valves. The furnace is loaded to the level of the top 8 with a dense layer of batch 10. The dome of the furnace 9 provides a free space for loading the charge and discharging the spent top gas . Through the charge column 10, a hot gas flow-coolant flows along the circumference of the jet 11 through the supply nozzles (tuyeres) 13 and the annular gas line 14. As a result of the counter flow of the charge column and the hot gas stream, heat exchange takes place between them and heating of the charge, direct reduction of the metals by carbon. The metallized charge is dropped downward and through the shoulders 12 enters the lower airlock chamber and then enters the melting chamber 21 periodically through the tray 20. The charge layer of the metallized charge 22 is located on the bottom of the chamber on which a high temperature gas stream with a temperature of 2200-2400 0C, which is formed by burning fuel in the fuel injector 25 with oxygen-enriched blast 24. The metallized batch is melted, the hot gas reflected from the surface of the melt heats the dome of the plaque at the same time villa chamber 26 and leaves the space of the melting chamber. The outgoing high-temperature gas stream at the outlet is mixed with a low-temperature top gas. Therefore, a low-temperature top gas is introduced into the dome of the smelting furnace via a gas top gas pipe 18 through a gas regulating valve 19. At the outlet 27, the temperature of the gas mixture is controlled by varying the flow rate of the low-temperature top gas, maintaining it at 1150-1220°C, and introducing a vertical gas line 28 into the lower part charge column along the circumference of the opening 11 through the tuyeres 13 and the annular gas line 14.

In the shaft furnace there is a countercurrent of charge and gas. The gas flow makes a circuit between the shaft furnace and the melting chamber. The molten metal represents steel, it is discharged through the lower tap, and the slag melt through the upper slag tap.

1. Carbonaceous granules consisting of iron oxides and alloying metals with stoichiometric carbon content form on the basis of a variety of raw materials - iron ore concentrate, small and dispersed industrial wastes containing iron oxides and alloying metals. The carbon-containing reagent is introduced into the formed oxide charge in a strictly stoichiometric amount for the reduction of iron and alloying metals. The mixture of the carbon-containing charge is granulated, the screened and drained fractions of 8-20 mm are loaded into the furnace in which the mono-column column is formed.

The granule fraction of less than 8 mm is limited by the deterioration of the gas permeability of the bed, the fraction above 20 mm is limited by a decrease in the rate of heat exchange and direct reduction of metals.

The fraction within 8-20 mm ensures a good gas permeability of the dense layer and the efficiency of heat exchange between the batch layer and the hot gas flow-coolant throughout the furnace section, as well as the direct reduction of metals by carbon.

2. The preparation of a metallized product from carbon-containing granules provides the most complete interaction of solid carbon with metal oxides. All direct reduction reactions of metals are endothermic. The heat consumption for heating the batch layer and endothermic reactions for the reduction of metals is provided by a hot gas flow-coolant introduced into the furnace along the circumference of the blast with the heating temperature at the entrance to the batch layer of 1150-1220°C.

The temperature below 1150°C is limited by the heat deficit for complete completion of heat exchange and recovery processes; the temperature above 1220°C is limited by the formation of a liquid phase in the layer of solid particles of granules and charge, which entails a disturbance of the counter flow regime of the charge and gas.

The temperature in the interval 1150-1220°C ensures the stability of the flow of heat exchange and recovery processes along the entire height of the shaft furnace.

3. The periodic batch production of hot metallized products through the sluice chamber from the shaft furnace to the melting chamber firstly creates the motion of dense layers of batch consistently along the entire height of the furnace and thereby prevents the sintering of the layers or destroys the sintered layer in the initial stage; secondly, the sluice chamber protects hot metallized materials from secondary oxidation, and thirdly, the loading of metallized products without cooling in a hot form creates a saving of thermal energy in the melting chamber.

4. Melting of the layer of hot metallized products in the melting unit by blowing by a high-temperature combustion flame at 2200-2400°C has a high technical and economic efficiency. Firstly, due to the loading of the metallized product in hot form, the heat energy consumption delivered to the melting unit is significantly reduced, and secondly, the replacement of the energy consumption of fuel by a 4-5-fold reduces the cost of the redistribution according to the energy expenditure on melting. The temperature below 2200°C is limited by the decrease in the melting rate, the temperature above 2400°C is limited by the resistance of the refractory lining of the unit and the increase in the frequency of repair. The temperature within the limits of 2200-2400°C provides stability, profitability of the steelmaking process.

**Example 1** The endothermic thermal effects of gasification of oxygen of iron oxide in the direct reduction of iron from hematite to the metallic state are determined by equation

$$\Delta Q_{_{энд}} = 10^{-2} \cdot Fe\big(0,4285\big(0,111 \cdot q_{_{зем}} + 0,222 \cdot q_{_{маг}} + 0,667 \cdot q_{_{вюс}}\big)\big) =$$

$$= 10^{-2} \cdot Fe\big(0,4285\big(0,111 \cdot 2525 + 0,222 \cdot 9462 + 0,667 \cdot 8940\big)\big) =$$

$$= 10^{-2} \cdot Fe\big(0,4285\big(280 + 2100 + 5963\big)\big) = 10^{-2} \cdot Fe \cdot 3575 \ \text{kJ / kg pellet}$$

where $q_{yem}$, $q_{mag}$, $q_{yus}$ - endothermic thermal effects of oxygen gasification in phases from hematite ($Fe_2O_3$) - ($Fe_3O_4$), magnetite ($Fe_3O_4$) - (FeO) and wustite (FeO) - ($Fe_{met}$) upon reduction with solid carbon, kJ / kg $O_2$ ; 0,111; 0.222; 0.667 are the mass fractions of oxygen gas of iron oxides in the respective phases from the total amount of oxygen gas per unit of iron.

If the content of total iron in carbon-containing granules is on average 55.0%, the endothermic heat effect will be

$$\Delta Q_{_{энд}} = 10^{-2} \cdot 55 \cdot 3575 = 1966 \ \text{kJ / kg.}$$

The heat content of metallized carbonaceous granules at a temperature of 1100 ° C is defined as the product of heat capacity and temperature, i.e.

$$\Delta Q_{_{гран}} = C_{_{гр}} \cdot T_{_{гр}} = 1,09 \cdot 1100 = 1197 \ \text{kJ / kg}$$

The total consumption of thermal energy for heating the charge and direct reduction of iron is

$$Q_{_{\Sigma ш}} = 1966 + 1197 = 3163,0 \ \text{kJ / kg}$$

This amount of heat must be transferred from the hot gas of the coolant to the burden layer. The initial temperature of the hot gas - coolant at the entrance to the bed is 1200°C on average and 250°C at the outlet. Then the transferred heat should be 3163.0 KJ / kg of granules, from which we determine the gas flow rate - the heat carrier by balance

$$\upsilon_{_{Г}}\big(C_{_{Г_0}} T_0 + C_{_{Г_В}} T_В\big) = Q_{_{\Sigma Ш}},$$

where $C_{_{ГО}}$-, $C_{_{ГВ}}$ - are the heat capacities of the gas, respectively, at a temperature of 1200°C ($C_{_{ГО}}$ = 1.72 KJ / m3 deg) and at 250°C ($C_{\Gamma B}$ = 1.42 KJ / m3 • deg). Substituting the values of the corresponding quantities and solving the equation for $\upsilon_\Gamma$, we determine the specific consumption of the hot gas of the heat carrier

$$\upsilon_\Gamma = Q_{\Sigma III} /\left(1{,}72 \cdot 1200 - 1{,}42 \cdot 250\right) = 3163/\left(2064 + 355\right) = \frac{3163}{2419} = 1{,}30 \ \text{m3 / kg}$$

or 1300 m3 / t of charge.

In operating shaft furnaces, the specific consumption of hot reducing gases in practice amounts to 1,400-1,600 m3 / t of charge in the altitudes.

The result obtained by the proposed method provides a real and economical flow of hot gas - coolant.

**Example 2.** The bulk of the carbonaceous granules of the 8-20 mm fraction is 1.6 t / m3. then on 1 m3 of the burden layer there is a gas volume $\upsilon$ = 1,6 • 1300 = 2086m3. it is the granule fraction within the range of 8-20 mm that ensures the porosity of the layer (the fraction of the free volume) at the level $\varepsilon_v$ = 0,38 - 0,40, the lumen (the fraction of the free section) $\varepsilon_{np}$ = 0,20-0,24 on average 0.22. The batch layer with a volume of 1 m3 (or 1.6 tons) is converted into a metallized product for 4.0 hours. From this calculation, the velocity of gas through the layer of charge will be

$$\omega_\Gamma = \frac{\upsilon_{\Gamma T}}{4{,}0 \cdot 3600 \cdot \varepsilon_{np}} = \frac{2080}{14400 \cdot 0{,}22} = 0{,}66 \ \text{m / s}$$

Such a velocity of gas flow in the batch layer is quite acceptable, under which the gas pressure difference does not exceed 200-300 mm. st / m with a maximum permissible pressure drop of 500-600 mm. water. St / m and provides a complete heat exchange in the layer between the gas and the charge.

**Example 3.** The temperature of the hot gaseous flow-coolant is controlled by changing the flow rate of the top gas to the high-temperature gas reflected from the surface of the melted charge in the melting chamber. The hot gas flare with a temperature of 2200-2400°C on average 2300°C at the outlet from the melting chamber is cooled to 1,700-1800°C on average to 1,750°C.

The top gas from the shaft furnace enters the melting chamber with a temperature of 200-300°C, an average of 250°C. In order to obtain the temperature of a mixture of gases equal to T = 12000C, we start from the balance equation

$$v_{\text{КГ}}(C_{\text{ГП}} \cdot T_\text{П} - C_{\text{КГ}} \cdot T_{\text{КГ}}) = (C_{\text{ГП}} \cdot T_\text{П} - C_{\text{СМ}} \cdot T_{\text{СМ}}),$$

where $v_{K\Gamma}$ - is the volume fraction of the low-temperature top gas with the heat capacity,

$C_{K\Gamma}$ = 1.42 kJ / m3 • grad and temperature $T_{K\Gamma}$ = 2500°C
$C_{\Gamma\Pi}$, $T_\Pi$ are the heat capacity and temperature of the gas leaving the melting chamber, respectively 1.9 kJ / m3 • deg and 17500°C;
$C_{CM}$, $T_{CM}$ - heat capacity and temperature of gas mixture, respectively $C_{CM}$ = 1,72 kJ / m3 • grad and Tcm = 1200°C;

Substituting the values of the corresponding parameters and solving the equation for $v_{K\Gamma}$, we determine the share of the top gas in the mixture.

$$v_{\hat{K}\tilde{A}} = \frac{1{,}9 \cdot 1750 - 1{,}72 \cdot 1200}{1{,}9 \cdot 1750 - 1{,}72 \cdot 250} = \frac{3325 - 2064}{3325 - 355} = \frac{1261}{2970} = 0{,}43$$

As can be seen, the regulation of the temperature of the hot gas stream - coolant with a temperature in the range of 1150-1220°C at the entrance to the burden layer is achieved within the limits of the change in the share of top gas in a mixture of 0.40-0.50 and high-temperature gas - the fuel combustion product within 0.5 -0.6, which ensures the continuity of melting of metallized products coming from the shaft furnace into the melting chamber.

**Example 4.** The duration of the stationary state of the charge column in the region of metallization of the granules causes the particles to coalesce. Over time, the coalescence of particles under the pressure of a column of overlying layers leads to the formation of large monolithic cakes, which creates a congestion in front of the outlet. Therefore, periodic paired release of the layer destroys the formed sinter in the initial stage and ensures the loosening of the layer in front of the outlet.

**Example 5.** The temperature of a blown hot flame in a 2200-2400°C melting chamber should ensure melting of the metallized pellets and obtaining a steel melt. The heat consumption for steel smelting from 1 kg of granules is determined by the equation

$$\Delta Q_{n\pi} = (C_{n\pi}(T_0 - T_{\text{мn}}) + \Delta q_{n\pi}) : e_{\text{мn}}$$

$C_{MП}$, $T_O$, $T_{MП}$, $\Delta q$, $e_{MП}$ - heat capacity, final and initial temperature, latent heat of melting and metal yield from the metallized product, respectively, $C_{MП}$ = 0.84; $T_O$ = 16000°C, $T_{MП}$ = 1100°C; q = 250 kJ / kg; $e_{MП}$ = 0.75 kg / kg.

Substituting the values of the corresponding quantities, we obtain.

$$\Delta Q_{n\pi} = (0{,}84(1600 - 1100) + 250) : 0{,}75 = 502{,}0 \text{ kJ / kg of pellets}$$

The received heat expense for melting is ensured by the following consumption of the high-temperature gas of the combustion product

$$V_{\text{в.г.}} = \frac{\Delta Q_{n\pi}}{C_{\text{в.г.}}(T_0 - T_{\text{вых}})} \text{ m3 / kg of pellets}$$

where

$$C_{\text{в.г.}}, \ T_0, \ T_{\text{вых}}, \ V_{\text{в.г.}}$$

- is the heat capacity, initial and final temperatures of the high-temperature gas, respectively, and the flow rate of the high-temperature gas flame, respectively,

$$C_{\text{в.г.}} = 2.0 \text{ kJ / m3} \cdot \text{deg;}$$

$T_0$ = 2200-2400°C and

$$T_{\text{вых}} = 1750°C$$

The corresponding values of the quantities are obtained.

a) at a temperature T0 = 2200°C

$$V_{\text{в.г.}} = \frac{502}{2{,}0 \cdot (2200 - 1750)} = \frac{502}{900} = 0{,}55 \text{ m3 / kg of pellets}$$

b) at a temperature T0 = 2400°C

$$V_{\text{в.г.}} = \frac{502}{2{,}0 \cdot (2400 - 1750)} = \frac{502}{1300} = 0{,}39 \text{ m3 / kg of pellets}$$

As can be seen, the consumption of high-temperature gas - combustion products of fuel per 1 kg of metallized pellets varies in the range 0.4-0.55 m3 / kg, which ensures obtaining the metal melt in the most economical way and corresponds to obtaining a mixture of hot gases of heat carriers introduced into the lower part of the mine with a temperature in the range of 1150-1220°C.

The proposed method of reducing steel melting represents a new technical solution, ensures the production of high technical and economic indicators of steel production, reduces the capital costs for the process many times over by eliminating such large units as agglomeration, coke production and oxygenconversion from the metallurgical complex, in terms of the unit of steel produced, which creates environmental safety and very convenient conditions for automation of the continuously connected complex.

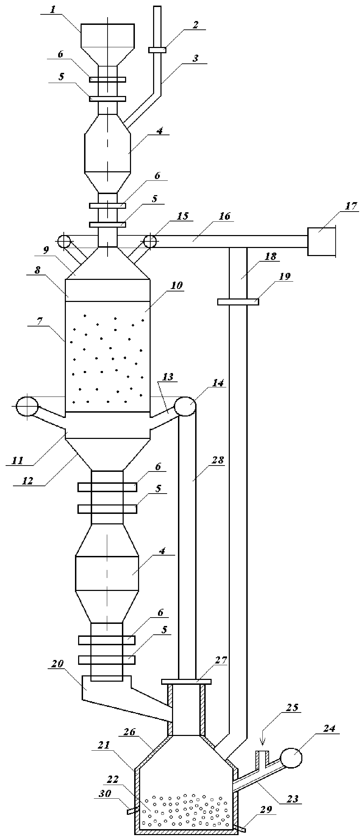

**Claims**

1. A method for reducing steel melting, comprising charging a charge into a shaft reduction melting furnace, injecting into the tuyeres an oxygen-enriched blast to create an acute combustion torch of coke and fuel additives, **characterized in that** the burden is a mono-slit consisting of carbon-containing iron oxide pellets and alloying metals of fraction 8-20 mm with stoichiometric content of carbon-containing reagents for complete reduction of iron oxides and alloying metals, heating of the charge layer is counter-current of the hot gas-coolant, the metallized pellets are periodically discharged through the sluice chamber to the melting chamber and melted by blowing with a high-temperature flare with an inlet temperature of 2200-2400°C, the off-gas is mixed with low-temperature top gas from the shaft furnace, a mixture of a gas stream with a temperature of 1150-1220°C, coolant, is introduced into the lower part of the layer of carbon-containing pellets in the shaft furnace, the melt smelted in the melting chamber is discharged through the tap.

2. A device for reducing steel melting, including a shaft reduction melting furnace, comprising a charging device, a top, a shaft, a barrel, and shoulder straps, **characterized in that** the melting chamber is connected in series to the shaft furnace, the charging and unloading apparatuses on the shaft furnace are made in the form sluice chambers, the loading lock chamber is connected to the receiving funnel from the top, and from the bottom - to the dome of the furnace, the unloading lock chamber is connected to the top from above, and from below - to the dome of the melting chamber, which It provided with peripherally spaced nozzles, venting on the dome and outlet tap holes on the hearth.

## INTERNATIONAL SEARCH REPORT

| International application No. |
|---|
| PCT/KZ 2016/000004 |

**A. CLASSIFICATION OF SUBJECT MATTER**

C21B 13/14 (2006.01)    C21B 13/02(2006.01)    F27B1/02 (2006.01)

According to International Patent Classification (IPC) or to both national classification and IPC

**B. FIELDS SEARCHED**

Minimum documentation searched (classification system followed by classification symbols)

C21B 13/00, 13/02, 13/14, C22B 5/00, F27B 1/00, 1/02, 1/10

Documentation searched other than minimum documentation to the extent that such documents are included in the fields searched

Electronic data base consulted during the international search (name of data base and, where practicable, search terms used)

PatSearch (RUPTO internal), USPTO, PAJ, Esp@cenet, DWPI, EAPATIS, PATENTSCOPE, Information Retrieval System of FTPS

**C. DOCUMENTS CONSIDERED TO BE RELEVANT**

| Category* | Citation of document, with indication, where appropriate, of the relevant passages | Relevant to claim No. |
|---|---|---|
| A | WO 2005/031009 A2 (HYLSA, S.A. DE C.V.) 07.04.2005 | 1-2 |
| A | US 7938882 B2 (MIDREX TECHNOLOGIES, INC.) 10.05.2011 | 1-2 |
| A | US 2014/0224068 A1 (SIEMENS VAI METALS TECHNOLOGIES) 14.08.2014 | 1-2 |

☐ Further documents are listed in the continuation of Box C.          ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 08 August 2016 (08.08.2016) | 18 August 2016 (18.08.2016) |

| Name and mailing address of the ISA/ | Authorized officer |
|---|---|
| | |
| Facsimile No. | Telephone No. |

Form PCT/ISA/210 (second sheet) (July 1998)

**EP 3 269 830 A1**

**Patent documents cited in the description**

- WO 2186160 A
- WO 26792 A